# EUROPEAN PATENT SPECIFICATION

(11) **EP 0 504 967 B1**
(45) Date of publication and mention of the grant of the patent: **13.12.1995**
(21) Application number: 92200639.0
(22) Date of filing: 06.03.1992
(51) Int. Cl.: H05B 41/38

(54) **Circuit arrangement**
Schaltungsanordnung
Circuit de commutation

(30) Priority: 15.03.1991 NL 9100458
(43) Date of publication of application: 23.09.1992
(73) Proprietor: Philips Electronics N.V., 5621 BA Eindhoven (NL); Philips Patentverwaltung GmbH, 22335 Hamburg (DE)
(72) Inventor: Derra, Günther, c/o Internationaal, NL-5656 AA Eindhoven (NL); Ganser, Hans-Günther, c/o Internationaal, NL-5656 AA Eindhoven (NL); Stormberg, Hans-Peter, c/o Internationaal, NL-5656 AA Eindhoven (NL)
(74) Representative: Dusseldorp, Jan Charles

(56) References cited:
- EP-A- 0 439 863
- EP-A- 0 439 864
- DE-A- 2 825 532

## Description

The invention relates to a method for operating a high-pressure sodium lamp with a controllable colour temperature T_{c}, in which method a power P is supplied to the lamp by means of current pulses with a current value I and a duty cycle D, whereby a change in the colour temperature T_{c} can be achieved through a change ΔD of the duty cycle.

A method of the kind mentioned in the opening paragraph is known from USP 4.137.484. It is possible with the known method to vary the colour temperature T_{c} of the light radiated by the lamp between approximately 2.000 K and approximately 2.900 K, provided the power P supplied to the lamp is constant. This implies that a change in the duty cycle ΔD is accompanied by a corresponding change in the current value ΔI, where the relation ΔI/ΔD < 0 is satisfied. Colour temperature variation from 2.000 K to 2.900 K in the known method is accompanied by a decrease of approximately 20% in the luminous flux radiated by the lamp. Such a decrease in the luminous flux is on the one hand too great to remain unnoticed by the human eye, and on the other hand too small to be used as a practical dimming facility for the lamp. It is required for a practical dimming facility that the luminous flux is controllable between limits with a ratio of at least 1 : 4, preferably 1 : 5. With the known method, however, this is not possible without the current value rising to an unacceptable level. There is also the risk that the colour temperature T_{c} falls to far below 2.000 K for high luminous flux values. A colour temperature of 2.000 K or less, however, is generally less desirable for applications other than public lighting.

The invention has for its object *inter alia* to provide means by which it is possible to provide a practical dimming possibility for a high-pressure sodium lamp and at the same time to realise a colour temperature T_{c} above 2.000 K.

According to the invention, a method of the kind mentioned in the opening paragraph is for this purpose characterized in that the change in the duty cycle ΔD is accompanied by a change ΔP in the power supplied to the lamp, for which it is true that ΔD/ΔP > 0.

The inventors have found that, with a method according to the invention, the luminous flux of a high-pressure sodium lamp which radiates white light under rated operating conditions is controllable between limits with a ratio of at least 1 : 4, while the light radiated by the lamp has a colour temperature T_{c} which varies in the range from 2.000 K to more than 3.000 K. It was a surprise to find, furthermore, that a greater luminous flux is accompanied by a higher colour temperature T_{c} This is an advantage, since this corresponds to a relation between luminous flux and colour temperature which is generally perceived to be pleasant by the human eye.

Preferably, the current I and the duty cycle D in a method according to the invention satisfy the relation$\text{I = a - bD,}$
in which a and b are constants. An advantage is that a linear, *i.e.* a very simple relation between the current I and the duty cycle D renders it possible to realise a practically applicable dimming range with a corresponding range of variations in the colour temperature T_{c}. The values of the constants a and b should then be chosen in mutual correspondence. For the constant a, it is advantageous to choose the value between I_{eff} and 4I_{eff}, in which I_{eff} is the effective current value through the lamp at rated operating conditions on a usual AC voltage supply source of 50 to 60 Hz. The value 4I_{eff} is connected with the requirement that the power consumption of the lamp during the short duration of the current pulses should not lead to acoustic resonance for small values of D. Practical measurements have taught the inventor that a value of 4I_{eff} forms a generally applicable limit value for this. In the case of a value for a equalling I_{eff}, on the other hand, it is still just possible to realise a desired dimming range for the case in which b = 0. Increasing of the value of b to above 0 leads to a wider range over which the luminous flux may be varied and also to an adjustment possibility of the accompanying colour temperature range. When the value of b is still further increased, however, the dimming range is reduced. For values of b above 3I_{eff}, accordingly, no dimming facility which is desirable in practice can be realised.

Although the desired dimming range is preferably realised by means of the relation I = a-bD, it is in principle also possible to realise a suitable dimming range for the case in which the relation ΔI/ΔD > 0 is satisfied. This leads to a relatively small range within which the duty cycle can be varied, at least for a linear relation between current and duty cycle, in the case of a suitable dimming range. For practical realisation, therefore, this imposes more stringent requirements on the circuit arrangement.

On practical grounds it is preferable to take a minimum value of 0,1 for the duty cycle D, since it was emperically found that the risk of extinguishing of the lamp is considerable in the case of smaller values of the duty cycle D.

An embodiment of a circuit arrangement to perform the method according to the invention will be explained in more detail below with reference to a drawing, in which
Fig. 1 is a diagrammatic picture of the construction of the circuit arrangement,
Fig. 2 shows the lamp characteristics, and
Fig. 3 gives the test results of a lamp operated by means of the circuit arrangement of Fig. 1.

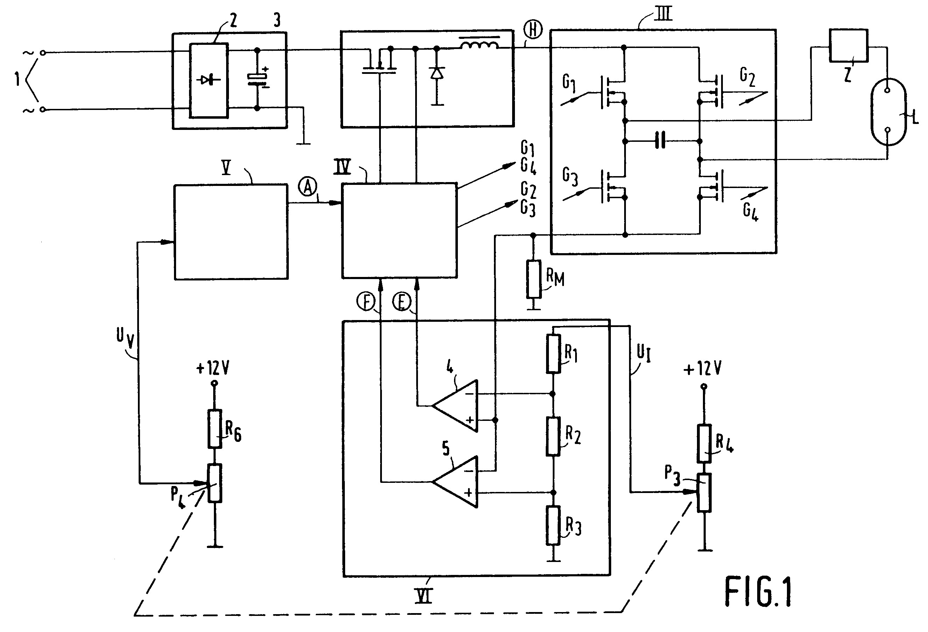

In Fig. 1, lamp L provided with a starter Z is included in a branch of a circuit III comprising four semiconductor switches G1, G2, G3, G4. The semiconductor switches G1 to G4 are so controlled with a repetition frequency by a control unit IV that switches G1 and G4 are conducting while switches G2 and G3 are non-conducting, and vice versa, alternately. In this manner a periodic polarity change of voltage across and current through the lamp is realised. Bridge circuit III is supplied with voltage pulses H, which voltage pulses have a repetition frequency which is coupled to the repetition frequency of the control of the bridge circuit switches. The voltage pulses H have a controllable duty cycle D. The voltage pulses H are generated in a downconverter II which is connected to a supply source *via* a rectifier network I with connection terminals 1. Downconverter II is also controlled by control unit IV. Clock pulses I for driving the control unit IV are supplied by a clock signal generator V. The clock generator V works with a fixed frequency, but with a clock pulse width which is adjustable by means of a control voltage Uᵥ. The instantaneous lamp current is measured by a measuring resistor Rₘ and compared with an upper and a lower limit of an adjustable average reference value U_{I}, in a comparator unit VI, which for that purpose is provided with comparators 4, 5 and voltage divider circuit R₁, R₂, R₃. Output signals E and F of the comparators 4 and 5, respectively, effect high-frequency modulation of the control of the downconverter, and thus of the voltage pulses H, *via* the control unit IV. A control of the value of the current through the lamp is realised in this way.

A linear relation between pulse height and duty cycle of the pulses supplied to the lamp by the downconverter is realised in the embodiment through coupling of the adjustment possibility of the current reference value U_{I}, by voltage divider circuit R₄, P₃ to the adjustment possibility of the control voltage Uᵥ by means of voltage divider circuit R₆, P₄, the relevant potentiometers P₃, P₄ having a shared adjustment member.

Characteristics were measured for a large number of discharge lamps, *i.e.* the colour temperature T_{c} and the luminous flux for various values of the duty cycle D and the current value I of the pulsatory current. The discharge lamps were of the Philips SDW 35 W type. The average rated lamp power was 35 W with an average rated effective current of 0,45 A.

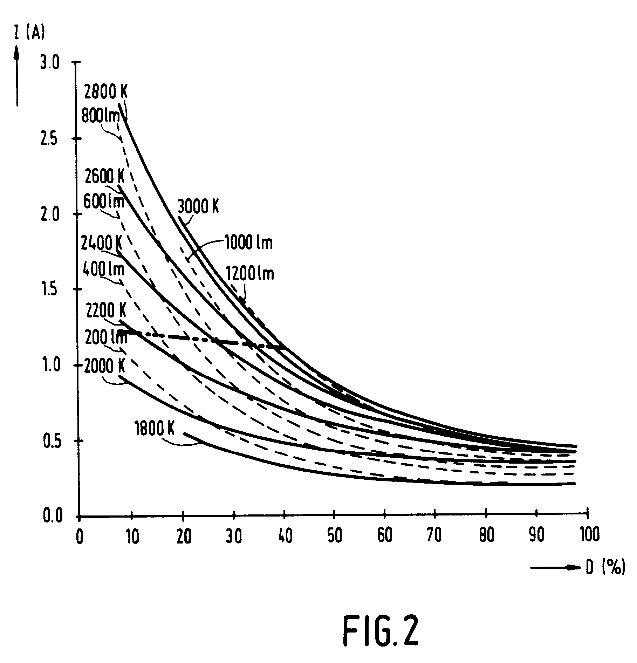

The results are shown in Fig. 2, where broken lines give the characteristics for constant luminous flux and full lines the characteristics for constant colour temperature T_{c}. The duty cycle D is plotted on the horizontal axis in % and the current I in A on the vertical axis. A dash-dot line gives the relation I = a - bD with a = 1,25 A and b = 0,35 A. The characteristics relate to average values, while it should be noted that the measuring accuracy for the colour temperature T_{c} is approximately 50 K.

Inspection of Fig. 2 will make it clear that a considerable range is available for realising the desired dimming facility for a range of the current I lying between 0,5 A and 2 A and a range of the duty cycle D lying between 10% and 90%. It is equally apparent from Fig. 2 that a dimming range can also be realised for which the relation ΔI/ΔD > 0 is satisfied in the case of a duty cycle D range between 10% and approximately 40%.

In a practical realisation of the embodiment described, the circuit arrangement is dimensioned in accordance with the relation between I and D as given in Fig. 2 with a having the value 1,25 A and b 0,35 A.

One of the lamps which were used for obtaining the characteristics of Fig. 2 was operated on the circuit arrangement described.

The values of both the luminous flux Φ and of the colour temperature T_{c} of the light emitted by the lamp were measured in dependence on the duty cycle D. The accompanying values of the current and of the power supplied to the lamp were also measured.

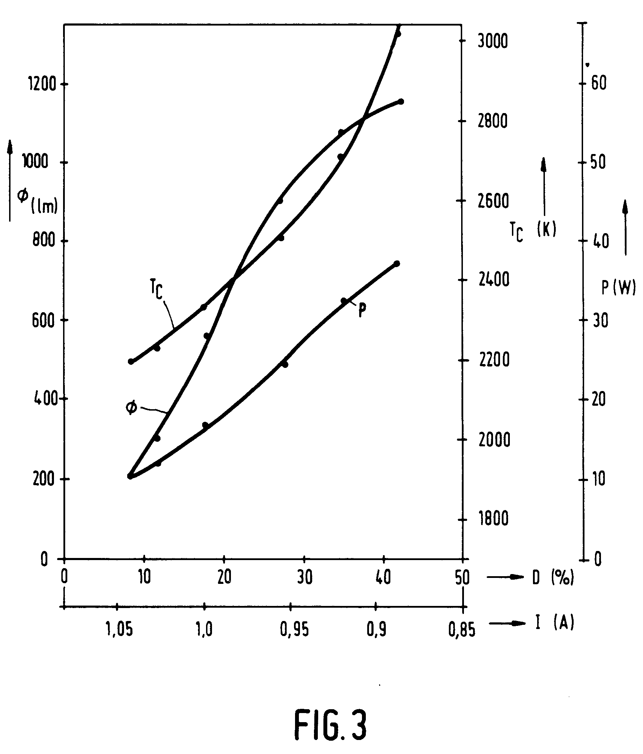

The test results are shown in the graph of Fig. 3. The duty cycle D in % and the current I in A are plotted on the horizontal axis, and the colour temperature T_{c}, the luminous flux Φ in lm and the power P supplied to the lamp in W are plotted along the vertical axis. The picture shows that the colour temperature T_{c} varies from 2.200 K to above 3.000 K over a luminous flux range from 250 lm to 1.150 lm. The power supplied to the lamp during this varies from approximately 10 W to 35 W. The duty cycle D has a minimum of 10%. This bottom limit is observed in order to prevent the lamp extinguishing during operation owing to an excessive rise in the re-ignition voltage.

Small differences are found between the results of the lamp operated in this way and the values for the colour temperature T_{c} and the luminous flux Φ which can be read from Fig. 2, which differences are due to on the one hand inaccuracies inherent in the measurements and on the other hand spread in lamp characteristics among individual lamps.

## Claims

1. A method for operating a high-pressure sodium lamp with a controllable colour temperature T_{c}, in which method a power P is supplied to the lamp by means of current pulses with a current value I and a duty cycle D, whereby a change in the colour temperature T_{c} can be achieved through a change ΔD of the duty cycle, characterized in that the change in the duty cycle ΔD is accompanied by a change ΔP in the power supplied to the lamp, for which it is true that ΔD/ΔP > 0.

2. A method as claimed in Claim 1, characterized in that the current I and the duty cycle D satisfy the relation$\text{I = a-bD,}$ in which a and b are constants.

## Patentansprüche

1. Verfahren zum Betreiben einer Hochdrucknatriumlampe mit regelbarer Farbtemperatur T_{c}, in welchem Verfahren der Lampe mittels Stromimpulsen der Stromstärke I, die ein Tastverhältnis D haben, eine Leistung P zugeführt wird, wobei eine Änderung der Farbtemperatur T_{c} durch eine Änderung ΔD des Tastverhältnisses D erreicht werden kann, dadurch gekennzeichnet, daß die Änderung ΔD des Tastverhältnisses D mit einer Änderung ΔP der der Lampe zugeführten Leistung einhergeht, wobei gilt ΔD/ΔP>0.

2. Verfahren nach Anspruch 1, dadurch gekennzeichnet, daß für die Stromstärke I und das Tastverhältnis D die Beziehung$\text{I = a-bD}$ erfüllt ist, worin a und b Konstanten sind.

## Revendications

1. Procédé pour faire fonctionner une lampe dans la vapeur de sodium à haute pression présentant une température de couleur commandable T_{c}, procédé suivant lequel une puissance P est alimentée à la lampe au moyen d'impulsions de courant ayant une valeur de courant I et un coefficient d'utilisation D, un changement de la température de couleur T_{c} étant réalisé par un changement ΔD du coefficient d'utilisation, caractérisé en ce que le changement du coefficient d'utilisation ΔD est accompagné d'un changement ΔP de la puissance alimentée à la lampe, pour lequel il est valable que ΔD/ΔP > 0.

2. Procédé selon la revendication 1, caractérisé en ce que le courant I et le coefficient d'utilisation D satisfont à la relation$\text{I = a-bD,}$ dans laquelle a et b sont des constantes.
